(19) Europäisches Patentamt
European Patent Office
Office européen des brevets

(11) **EP 4 525 203 A1**

(12) **EUROPEAN PATENT APPLICATION**
published in accordance with Art. 153(4) EPC

(43) Date of publication:
**19.03.2025 Bulletin 2025/12**

(21) Application number: **23802768.4**

(22) Date of filing: **05.05.2023**

(51) International Patent Classification (IPC):
***H01Q 1/22*** (2006.01)

(52) Cooperative Patent Classification (CPC):
Y02D 30/70

(86) International application number:
**PCT/CN2023/092347**

(87) International publication number:
**WO 2023/216996 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.05.2022 CN 202210493211**

(71) Applicant: **Vivo Mobile Communication Co., Ltd. Dongguan, Guangdong 523863 (CN)**

(72) Inventors:
- **SONG, Yalei**
  **Dongguan, Guangdong 523863 (CN)**
- **HU, Yuchen**
  **Dongguan, Guangdong 523863 (CN)**
- **JIANG, Rui**
  **Dongguan, Guangdong 523863 (CN)**
- **LI, Pengpeng**
  **Dongguan, Guangdong 523863 (CN)**

(74) Representative: **Conti, Marco**
**Bugnion S.p.A.**
**Via di Corticella, 87**
**40128 Bologna (IT)**

(54) **ELECTRONIC DEVICE**

(57) This application discloses an electronic device, and pertains to the field of communication technologies. The electronic device includes: a SAR sensor, where the SAR sensor includes a first detection channel and a second detection channel; and a first antenna electrode and a second antenna electrode, where the first antenna electrode is connected to the SAR sensor through the first detection channel, the second antenna electrode is connected to the SAR sensor through the second detection channel, and the SAR sensor determines a distance between the electronic device and a human body by using a signal of the first antenna electrode and/or a signal of the second antenna electrode; where an adjustment path is disposed between the first antenna electrode and the second antenna electrode, and the adjustment path is configured to adjust a connection status between the first antenna electrode and the second antenna electrode.

FIG. 2

## Description

## CROSS-REFERENCE TO RELATED APPLICATIONS

This application claims priority to Chinese Patent Application No. 202210493211.8, filed with the China National Intellectual Property Administration on May 7, 2022 and entitled "ELECTRONIC DEVICE", which is incorporated herein by reference in its entirety.

## TECHNICAL FIELD

This application pertains to the field of communication technologies, and specifically, to an electronic device.

## BACKGROUND

An electronic device with an antenna transmitting apparatus generates electromagnetic radiation. For a purpose of reducing impact of electromagnetic radiation on a user, when the user uses the electronic device, a distance between the user and the electronic device is detected by using a capacitive proximity sensor, a specific absorption rate (Specific Absorption Rate, SAR) sensor, or the like built in the electronic device. When the distance to the user reaches a specific threshold, radiated power of an antenna is reduced to reduce radiation to a human body.

The SAR sensor uses an area of a metal plate of an antenna electrode to detect the distance between the user and the electronic device. One detection channel is corresponding to one antenna electrode, and the antenna electrode serves as a plate of a capacitor. However, due to a limitation of a space size of the electronic device, an area of a built-in single antenna electrode is small. Consequently, the detection distance of the SAR sensor is limited, and a radiation amount of the antenna cannot be accurately controlled, causing adverse impact on the human body.

## SUMMARY

Embodiments of this application provide an electronic device, to resolve an existing problem caused by a limited detection distance of a SAR sensor.

According to a first aspect, an embodiment of this application provides an electronic device, including:

a SAR sensor, where the SAR sensor includes a first detection channel and a second detection channel; and
a first antenna electrode and a second antenna electrode, where the first antenna electrode is connected to the SAR sensor through the first detection channel, the second antenna electrode is connected to the SAR sensor through the second detection channel, and the SAR sensor determines a distance between the electronic device and a human body by using a signal of the first antenna electrode and/or a signal of the second antenna electrode; where an adjustment path is disposed between the first antenna electrode and the second antenna electrode, and the adjustment path is configured to adjust a connection status between the first antenna electrode and the second antenna electrode.

In this embodiment of this application, the adjustment path is disposed between the first antenna electrode and the second antenna electrode that are included in the electronic device, and is configured to adjust the connection status between the first antenna electrode and the second antenna electrode. In this way, a plurality of antenna electrodes can be adjacently connected, and an area of the antenna electrodes of the electronic device is expanded, so that a limit detection distance that is between the electronic device and the human body and that is detected by the SAR sensor can be corresponding to the area of the plurality of connected antenna electrodes and can be increased correspondingly. Therefore, the electronic device can detect a user at a long distance, and when the user is not close to the electronic device, radiated power of the antennas can be increased, and performance of the antennas can be improved. When the user is close to the electronic device, the radiated power of the antennas is reduced to reduce radiation to the user.

## BRIEF DESCRIPTION OF THE DRAWINGS

FIG. 1 is a diagram of a circuit structure of an electronic device according to a first embodiment of this application;
FIG. 2 is a diagram of a circuit structure of an electronic device according to a second embodiment of this application;
FIG. 3 and FIG. 4 are diagrams of a parameter adjustment method corresponding to an electronic device according to a second embodiment of this application;
FIG. 5 is a diagram of a circuit structure of an electronic device according to a third embodiment of this application;
FIG. 6 is a schematic flowchart of a parameter adjustment method corresponding to an electronic device according to a third embodiment of this application;
FIG. 7 is a diagram of a circuit structure of an electronic device according to a fourth embodiment of this application;
FIG. 8 is a diagram of a parameter adjustment method corresponding to an electronic device according to a fourth embodiment of this application;
FIG. 9 is a diagram of a circuit structure of an electronic device according to a fifth embodiment of this application; and

FIG. 10 is a diagram of a circuit structure of an electronic device according to a sixth embodiment of this application.

## DETAILED DESCRIPTION

The following clearly describes technical solutions in embodiments of this application with reference to accompanying drawings in embodiments of this application. It is clear that the described embodiments are some but not all embodiments of this application. All other embodiments obtained by a person of ordinary skill in the art based on embodiments of this application shall fall within the protection scope of this application.

In the specification and claims of this application, terms such as "first" and "second" are intended to distinguish between similar objects but are not used to indicate a specific order or sequence. It should be understood that data used in this way is exchangeable in a proper case, so that embodiments of this application can be implemented in an order other than the order shown or described herein. Objects differentiated by using "first", "second", and the like usually belong to one type, and a quantity of objects are not limited. For example, a first object may mean one or more objects. In addition, "and/or" in the specification and claims represents at least one of associated objects. A character "/" usually indicates an "or" relationship between associated objects.

With reference to the accompanying drawings by using specific embodiments and application scenarios thereof, the following details an electronic device provided in embodiments of this application.

The electronic device in embodiments of this application includes: a SAR sensor, where the SAR sensor includes a first detection channel and a second detection channel; and a first antenna electrode and a second antenna electrode, where the first antenna electrode is connected to the SAR sensor through the first detection channel, the second antenna electrode is connected to the SAR sensor through the second detection channel, and the SAR sensor determines a distance between the electronic device and a human body by using a signal of the first antenna electrode and/or a signal of the second antenna electrode; where an adjustment path is disposed between the first antenna electrode and the second antenna electrode, and the adjustment path is configured to adjust a connection status between the first antenna electrode and the second antenna electrode.

An antenna electrode is a capacitive electrode, and a relationship between a capacitance of the antenna electrode, an area of the antenna electrode, and a distance between an object and the antenna electrode may be represented by the following formula (1):

$$C = \frac{k \cdot S \cdot \varepsilon}{h} \qquad \text{formula (1)},$$

where

C is the capacitance between the antenna electrode and the ground, $k$ is an electrostatic force constant, S is the area of the antenna electrode, $\varepsilon$ is a dielectric constant, and $h$ is the distance between the object and the antenna electrode, that is, the distance between the human body and the electronic device.

When the human body is close to the antenna electrode, the dielectric constant changes due to a change in an external medium, and then the capacitance between the antenna electrode and the ground changes.

A relationship between the capacitance of the antenna electrode, a quantity of electric charge, and a voltage change of the antenna electrode may be represented by the following formula (2):

$$C = \frac{Q}{U} \Rightarrow U = \frac{Q}{C} \qquad \text{formula (2)},$$

where

C is the capacitance between the antenna electrode and the ground, Q is the quantity of electric charge of the antenna electrode, and U is a voltage difference between the antenna electrode and the ground.

In this case, a capacitor is charged with a same quantity of electric charge. If the voltage difference between the antenna electrode and the ground changes, the SAR sensor can determine a variation in the external capacitance by detecting a change in a voltage signal of the antenna electrode connected to a corresponding detection channel, thereby determining the close distance between the human body and the electronic device.

In embodiments of this application, the electronic device includes the first antenna electrode and the second antenna electrode. The adjustment path is disposed between the first antenna electrode and the second antenna electrode, and is configured to adjust the connection status between the first antenna electrode and the second antenna electrode.

Herein, the first antenna electrode and the second antenna electrode indicate that the electronic device includes at least two antenna electrodes. Correspondingly, the first detection channel and the second detection channel indicate that the SAR sensor includes at least two detection channels.

When the electronic device includes more than two antenna electrodes, an adjustment path is disposed between every two adjacent antenna electrodes. The adjustment path enables corresponding adjacent antenna electrodes to be in a connected state or an isolated state. The following provides detailed descriptions by using embodiments corresponding to the accompanying drawings.

In embodiments of this application, the SAR sensor can separately detect a change in a voltage signal of the first antenna electrode by using the first detection channel, to determine the distance between the human body and the electronic device. The distance is directly proportional to an area of the first antenna electrode.

Alternatively, the SAR sensor can separately detect a change in a voltage signal of the second antenna electrode by using the second detection channel, to determine the distance between the human body and the electronic device. The distance is directly proportional to an area of the second antenna electrode.

Alternatively, the SAR sensor can detect both a change in a voltage signal of the first antenna electrode and a change in a voltage signal of the second antenna electrode by using the first detection channel, to determine the distance between the human body and the electronic device. The distance is directly proportional to a sum of areas of the first antenna electrode and the second antenna electrode.

Alternatively, the SAR sensor can detect both a change in a voltage signal of the first antenna electrode and a change in a voltage signal of the second antenna electrode by using the second detection channel, to determine the distance between the human body and the electronic device. The distance is directly proportional to a sum of areas of the first antenna electrode and the second antenna electrode.

In an embodiment, the adjustment path includes an inductor or a resistor.

The first antenna electrode and the second antenna electrode are connected through the inductor or the resistor, or are directly connected through a trace. In this case, one detection channel is selected from the first detection channel and the second detection channel of the SAR sensor to detect the signals of both the first antenna electrode and the second antenna electrode, and other detection channels are turned off or are configured to be in high-impedance states.

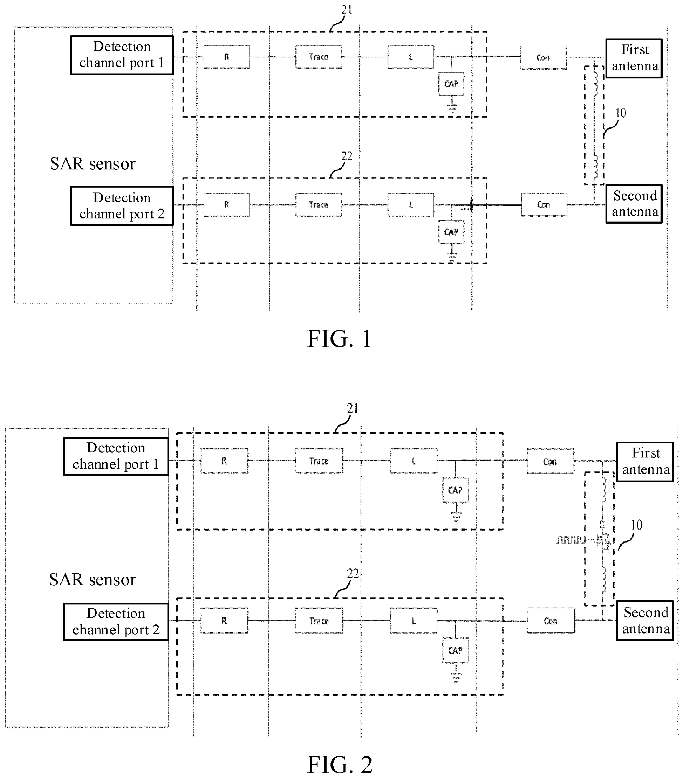

FIG. 1 is a diagram of a circuit structure of an electronic device according to a first embodiment of this application.

As shown in FIG. 1, a SAR sensor includes a first detection channel 21 and a second detection channel 22, the first detection channel 21 is connected to a detection channel port 1 of the SAR sensor, and the second detection channel 22 is connected to a detection channel port 2 of the SAR sensor. The first detection channel 21 and the second detection channel 22 each include a resistor R, an inductor L, and a capacitor (CAP), and are further provided with a trace connected to a main board.

An adjustment path 10 disposed between a first antenna and a second antenna includes inductors. As shown in FIG. 1, two adjacent antennas, namely, the first antenna and the second antenna, are connected through the two inductors. During layout of a printed circuit board, the two inductors may be respectively disposed on grounding spring plates (or feed spring plates) of the two adjacent antennas, namely, the first antenna and the second antenna, to reduce spurious waves generated by excess traces and ensure performance of the antennas.

In the embodiment in FIG. 1, the adjustment path 10 includes the two inductors, but a quantity of inductors is not limited in this application.

As shown in FIG. 1, the first antenna (that is, a first antenna electrode) is connected to the first detection channel 21 through an interface Con, and the second antenna (that is, a second antenna electrode) is connected to the second detection channel 22 through an interface Con. In this embodiment, a connection between only one detection channel and an antenna is reserved, and connections between other detection channels and corresponding antennas are removed.

An example is used in which the connection between the first antenna and the first detection channel 21 is reserved. In this case, in this embodiment, the SAR sensor can detect changes in voltage signals of both the first antenna electrode and the second antenna electrode by using the first detection channel, to determine a distance between a human body and the electronic device.

In other embodiments, alternatively, the first antenna may be disconnected from the first detection channel 21, and the second antenna may be connected to the second detection channel 22. In this way, the SAR sensor can detect changes in voltage signals of both the first antenna electrode and the second antenna electrode by using the second detection channel, to determine a distance between a human body and the electronic device.

In this embodiment, the adjustment path including the inductor or the resistor is disposed between the first antenna and the second antenna. In this way, a plurality of antenna electrodes are adjacently connected, and an area of the antenna electrodes of the electronic device can be expanded, so that a limit detection distance that is between the electronic device and the human body and that is detected by the SAR sensor can be corresponding to the area of the plurality of connected antenna electrodes and can be increased correspondingly. Therefore, the electronic device can detect a user at a long distance, and when the user is not close to the electronic device, radiated power of the antennas can be increased, and performance of the antennas can be improved. When the user is close to the electronic device, the radiated power of the antennas is reduced to reduce radiation to the user.

In an embodiment, the adjustment path further includes a switch. The switch is connected in series to the inductor; or the switch is connected in series to the resistor.

The first antenna electrode and the second antenna electrode are connected through the inductor and the switch that are connected in series to each other, connected through the resistor and the switch that are connected in series to each other, or connected through the trace and the switch. In this case, by controlling opening or closing of the switch, the SAR sensor may separately detect a signal of a corresponding antenna electrode by using a detection channel, or select one detection channel from the first detection channel and the second detection channel of the SAR sensor to detect the signals of both the first antenna electrode and the second antenna electrode.

Optionally, when the switch is turned off, the first antenna electrode and the second antenna electrode are in an isolated state, and the SAR sensor detects the signal of the first antenna electrode by using the first detection channel, to determine a first distance between the electronic device and the human body; or the SAR sensor detects the signal of the second antenna electrode by using the second detection channel, to determine a second distance between the electronic device and the human body.

When the switch is turned on, the first antenna electrode and the second antenna electrode are in a connected state, the SAR sensor detects the signal of the first antenna electrode and the signal of the second antenna electrode by using the first detection channel, to determine a third distance between the electronic device and the human body, and the second detection channel is in a high-impedance state; or the SAR sensor detects the signal of the first antenna electrode and the signal of the second antenna electrode by using the second detection channel, to determine a third distance between the electronic device and the human body, and the first detection channel is in a high-impedance state.

FIG. 2 is a diagram of a circuit structure of an electronic device according to a second embodiment of this application.

In this embodiment, an adjustment path 10 includes two inductors and a switch connected in series between the two inductors. Two adjacent antennas, namely, a first antenna and a second antenna, are connected through the two inductors, and one switch is connected in series between the two inductors. The switch may be an ordinary switch, for example, an N-channel metal oxide semiconductor (NMOS) switch. The first antenna is connected to a first detection channel 21 through an interface Con, and the second antenna is connected to a second detection channel 22 through an interface Con.

When the switch is turned on, one detection channel of a SAR sensor normally operates, and other detection channels are configured to be in high-impedance states or are turned off.

When the switch is turned off, the SAR sensor can detect a change in a voltage signal of the first antenna electrode by using the first detection channel, to determine a distance n1 between a human body and the electronic device. A maximum distance n1 that is between the electronic device and the human body and that can be detected by the SAR sensor is related to an area of the first antenna electrode. In addition, the SAR sensor can detect a change in a voltage signal of the second antenna electrode by using the second detection channel, to determine a distance n2 between the human body and the electronic device. A maximum distance n2 that is between the electronic device and the human body and that can be detected by the SAR sensor is related to an area of the second antenna electrode.

Optionally, the areas of the first antenna electrode and the second antenna electrode are different.

If the area of the first antenna electrode is greater than the area of the second antenna electrode, the distance n1 that can be detected by the SAR sensor is greater than the distance n2 that can be detected by the SAR sensor. If the area of the second antenna electrode is greater than the area of the first antenna electrode, the distance n2 that can be detected by the SAR sensor is greater than the distance n1 that can be detected by the SAR sensor.

When the switch is turned on, the SAR sensor can detect the changes in the voltage signals of both the first antenna electrode and the second antenna electrode by using the first detection channel or the second detection channel that can normally operate, to determine the distance n between the human body and the electronic device. A maximum distance n that is between the electronic device and the human body and that can be detected by the SAR sensor is related to a sum of the areas of the first antenna electrode and the second antenna electrode, where n>n1 and n>n2.

If the area of the first antenna electrode is greater than the area of the second antenna electrode, n>n1>n2.

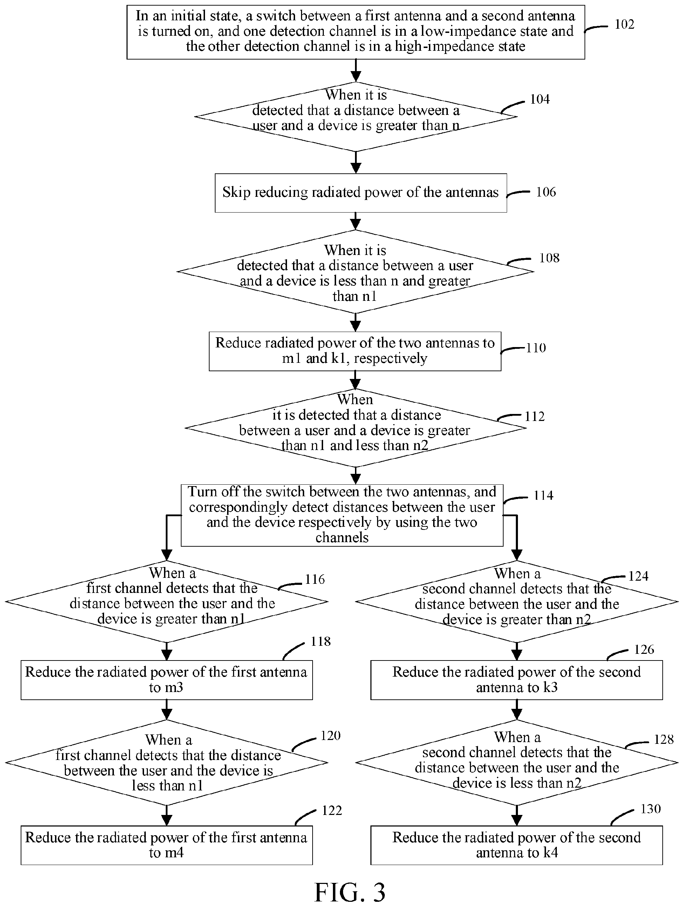

The following describes an operating principle of the electronic device in the second embodiment of this application with reference to an embodiment in FIG. 3. In this embodiment, an example is used in which the area of the first antenna electrode is greater than the area of the second antenna electrode and only one detection channel normally operates through a high-impedance configuration.

Step 102: In an initial state, the switch between the first antenna and the second antenna is turned on, and one detection channel is in a low-impedance state and the other detection channel is in a high-impedance state. For example, the first detection channel connected to a detection channel port 1 is in a low-impedance state, and the second detection channel connected to a detection channel port 2 is in a high-impedance state. In this case, a limit distance that is between the electronic device and a user and that is detected by the SAR sensor is n.

Step 104: Determine whether a distance between the user and the electronic device and that is detected by the SAR sensor is greater than n.

Step 106: If the detected distance is greater than n, skip reducing radiated power of the first antenna and radiated power of the second antenna.

Step 108: Determine whether a distance between the user and the electronic device and that is detected by the SAR sensor is less than n and greater than n1.

Step 110: If the detected distance is less than n and greater than n1, reduce radiated power of the first antenna and the second antenna to m1 and k1, respectively.

Step 112: Determine whether a distance between the user and the electronic device and that is detected by the SAR sensor is greater than n1 and less than n2.

Step 114: If the detected distance is greater than n1 and less than n2, turn off the switch between the first antenna and the second antenna, and correspondingly detect distances between the user and the electronic device respectively by using the two detection channels.

Step 116: Determine whether the distance between the user and the electronic device and that is detected by the first channel is greater than n1.

Step 118: If the detected distance is greater than n1, adjust the radiated power of the first antenna to m3.

Step 120: Determine whether the distance between the user and the electronic device and that is detected by the first channel is less than n1.

Step 122: If the detected distance is less than n1, adjust the radiated power of the first antenna to m4.

Step 124: Determine whether the distance between the user and the electronic device and that is detected by the second channel is greater than n2.

Step 126: If the detected distance is greater than n2, adjust the radiated power of the second antenna to k3.

Step 128: Determine whether the distance between the user and the electronic device and that is detected by the second channel is less than n2.

Step 130: If the detected distance is less than n2, adjust the radiated power of the second antenna to k4.

To be specific, when the switch is turned on and it is detected that the distance is greater than n, neither the radiated power of the first antenna nor the radiated power of the second antenna is reduced. When the switch is turned on and it is detected that the distance is less than n and greater than n1, the radiated power of the first antenna is reduced to m1, and the radiated power of the second antenna is reduced to k1.

When the switch is turned off and it is detected that the distance is less than n1, the radiated power of the first antenna is reduced to m4. When the switch is turned off and it is detected that the distance is greater than n1, the radiated power of the first antenna is reduced to m3.

When the switch is turned off and it is detected that the distance is greater than n2, the radiated power of the second antenna is reduced to k3. When the switch is turned off and it is detected that the distance is less than n2, the radiated power of the second antenna is reduced to k4.

In this embodiment, the adjustment path including the switch connected in series to an inductor or a resistor is disposed between the first antenna electrode and the second antenna electrode. In this way, a plurality of antenna electrodes are adjacently connected. When the switch is turned off, a maximum distance that can be detected by the SAR sensor by using each of a plurality of detection channels is corresponding to an area of a single antenna electrode connected to the detection channel. When the switch is turned on, a maximum distance that can be detected by the SAR sensor is corresponding to an area of connected antenna electrodes. Different antennas can independently control radiated power, thereby improving performance of the antennas at a short distance.

Through segmented connections between adjacent antenna electrodes, when the user is far away from the electronic device, a large distance is detected, and an antenna radiation frequency is not reduced. This can ensure antenna performance. When the user approaches the electronic device, multi-distance detection is implemented by successively disconnecting the connected antenna electrodes hierarchically. A corresponding radiation frequency threshold is set for each detection distance, and then the antenna radiation frequency is reduced successively, so that radiation to the user can be reduced while ensuring optimized antenna performance. In addition, when the user is close to the electronic device, all control switches are turned off, so that mutual interference between two antennas can be minimized.

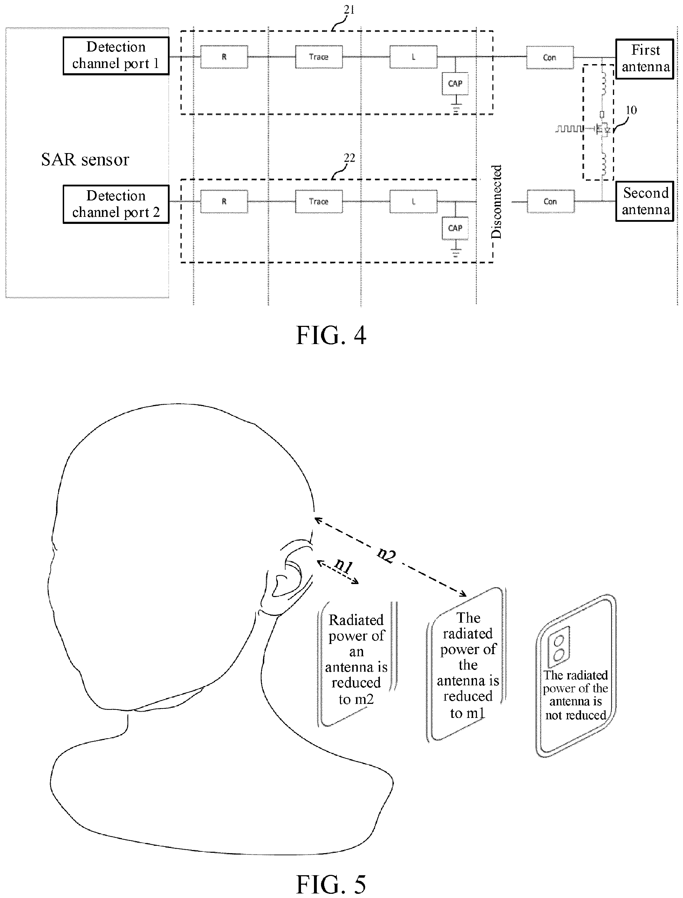

Refer to FIG. 4 by now. FIG. 4 is a diagram of a circuit structure of an electronic device according to a third embodiment of this application.

As shown in FIG. 4, an adjustment path 10 includes two inductors and a switch connected in series between the two inductors. A first antenna is connected to a first detection channel 21 through an interface Con, and a second antenna is disconnected from a second detection channel 22. Two adjacent antennas, namely, the first antenna and the second antenna, are connected at a same detection channel port 1 of a SAR sensor through the two inductors, and a switch is connected in series between the two inductors. The switch may be an ordinary switch, for example, an NMOS switch.

In this embodiment, a connection between an antenna and a corresponding detection channel may be removed by using the switch element, or may be removed by cutting off a trace or an interface.

During layout of a printed circuit board, the two inductors are respectively disposed close to grounding spring plates (or feed spring plates) of the two antennas, and the switch may be set anywhere between the two inductors. Optionally, the switch is disposed away from a heat producer of a resistive device.

As shown in FIG. 5, when the switch is turned off, the SAR sensor can detect a change in a voltage signal of the first antenna electrode by using the first detection channel, to determine a distance n1 between a human body and the electronic device. A maximum distance that is between the electronic device and the human body and that can be detected by the SAR sensor is related to an area of the first antenna electrode. In this case, a corresponding radiation frequency threshold is set for the detection distance. When a distance is less than n1, an antenna radiation frequency is reduced to m2.

When the switch is turned on, the SAR sensor can detect changes in voltage signals of both the first antenna electrode and the second antenna electrode by using the first detection channel, to determine a distance n2 between a human body and the electronic device. A maximum distance that is between the electronic device and the human body and that can be detected by the SAR sensor is related to a sum of areas of the first antenna electrode and the second antenna electrode, where n2>n1. In this case, a corresponding radiation frequency threshold is set for the detection distance. When a distance is greater than n1 and less than n2, an antenna radiation frequency is reduced to m1.

When the switch is turned on, if a distance that is between the electronic device and the human body and that is detected by the SAR sensor is greater than n2, radiated power of the antennas is not reduced.

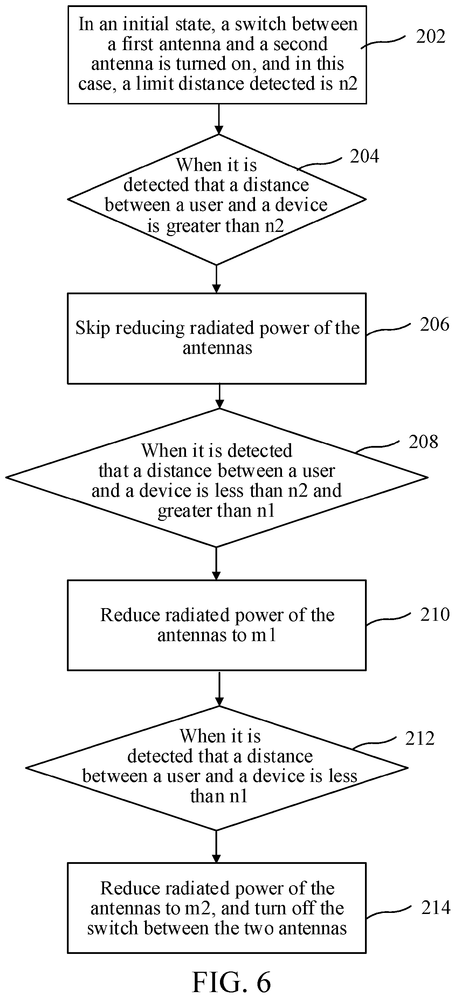

The following describes an operating principle of the electronic device in the third embodiment of this application with reference to an embodiment in FIG. 6.

As shown in FIG. 6, the following steps are included.

Step 202: In an initial state, the switch between the first antenna and the second antenna is turned on, and in this case, a limit distance that is between the electronic device and a user and that is detected by the SAR sensor is n2.

Step 204: Determine whether a distance between the user and the electronic device and that is detected by the SAR sensor is greater than n2.

Step 206: If the detected distance is greater than n2, skip reducing radiated power of the first antenna and radiated power of the second antenna.

Step 208: Determine whether a distance between the user and the electronic device and that is detected by the SAR sensor is less than n2 and greater than n1.

Step 210: If the detected distance is less than n2 and greater than n1, reduce radiated power of the first antenna and the second antenna to m1.

Step 212: Determine whether a distance between the user and the electronic device and that is detected by the SAR sensor is less than n1.

Step 214: If the detected distance is less than n1, reduce radiated power of the first antenna and the second antenna to m2, and turn off the switch between the two antennas.

In this embodiment, the adjustment path including the switch connected in series to an inductor or a resistor is disposed between the first antenna electrode and the second antenna electrode. In this way, a plurality of antenna electrodes are adjacently connected. When the switch is turned off, a maximum distance that can be detected by the SAR sensor is corresponding to an area of a single antenna electrode. When the switch is turned on, a maximum distance that can be detected by the SAR sensor is corresponding to an area of connected antenna electrodes. The connection between the plurality of antenna electrodes increases the area of the antenna electrodes that can be detected by the SAR sensor and increases a detection distance.

Through segmented connections between adjacent antenna electrodes, when the user is far away from the electronic device, a large distance is detected, and an antenna radiation frequency is not reduced. This can ensure antenna performance. When the user approaches the electronic device, multi-distance detection is implemented by successively disconnecting the connected antenna electrodes hierarchically. A distance threshold that can be detected by the SAR sensor is controlled by controlling a quantity of connected antenna electrodes, to improve antenna performance. A corresponding radiation frequency threshold is set for each detection distance, and then the antenna radiation frequency is reduced successively, so that radiation to the user can be reduced while ensuring optimized antenna performance. In addition, when the user is close to the electronic device, all control switches are turned off, so that mutual interference between two antennas can be minimized.

In other embodiments, alternatively, the first antenna may be disconnected from the first detection channel 21, and the second antenna may be connected to the second detection channel 22. In this way, through opening or closing of the switch, the SAR sensor can separately detect a change in a voltage signal of the second antenna electrode by using the second detection channel, to determine a distance n3 between a human body and the electronic device; or can detect changes in voltage signals of both the first antenna electrode and the second antenna electrode by using the second detection channel, to determine a distance n4 between a human body and the electronic device, where n4>n3.

In an embodiment, the switch is a temperature control switch, configured to detect a temperature of the electronic device and open or close based on the temperature.

When the switch is turned off, the first antenna electrode and the second antenna electrode are in an isolated state, and the SAR sensor detects the signal of the first antenna electrode by using the first detection channel, to determine a first capacitance of the first antenna electrode; or the SAR sensor detects the signal of the second antenna electrode by using the second detection channel, to determine a second capacitance of the second antenna electrode.

When the switch is turned on, the first antenna electrode and the second antenna electrode are in a connected state, the SAR sensor detects the signal of the first antenna electrode and the signal of the second antenna electrode by using the first detection channel, to determine a third capacitance corresponding to the signal of the first antenna electrode and the signal of the second antenna electrode, and the second detection channel is in a high-impedance state; or the SAR sensor detects the signal of the first antenna electrode and the signal of the second antenna electrode by using the second detection channel, to determine a third capacitance corresponding to the signal of the first antenna electrode and the signal of the second antenna electrode, and the first detection channel is in a high-impedance state.

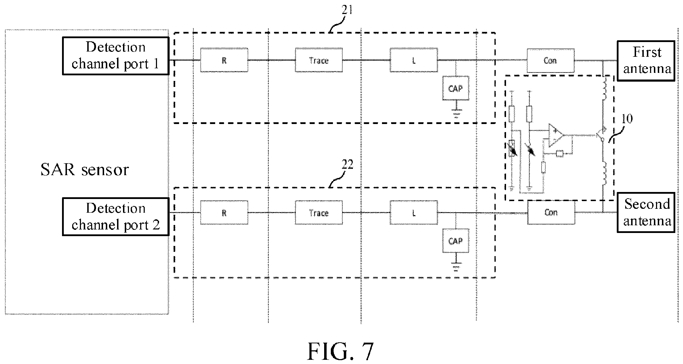

Refer to FIG. 7 by now. FIG. 7 is a diagram of a circuit structure of an electronic device according to a fourth embodiment of this application.

In this embodiment, an adjustment path 10 includes two inductors and a switch connected in series between the two inductors. Two adjacent antennas, namely, a first antenna and a second antenna, are connected through the two inductors, and one switch is connected in series between the two inductors. The fourth embodiment is different from the third embodiment in that the switch is a temperature control switch. As described in the foregoing formula (1), a capacitance of an antenna electrode is directly proportional to an area of the antenna electrode.

When the temperature control switch is turned off, a SAR sensor can respectively detect a capacitance of the first antenna electrode and a capacitance of the second antenna electrode by using corresponding detection channels. When the switch is turned on, the SAR sensor detects a sum of capacitances of the first antenna electrode and the second antenna electrode by using a detection channel that normally operates.

It can be learned from the foregoing formula (1) that a capacitance determined by the SAR sensor through detection is related to an area of an antenna. However, when an actual temperature of a main board of the electronic device increases, a dielectric constant increases, resulting in an increase in an actual capacitance C. If the temperature of the main board is high, an error is reported as a result of exceeding an invariable upper-limit value of a capacitance detected by the SAR sensor. An error does not need to be reported when an increase in a capacitance exceeds an invariable range because of an actual temperature increase. In this case, an area of antenna electrodes can be expanded to increase a capacitance that can be detected by the SAR sensor, to avoid an error report given by the SAR sensor.

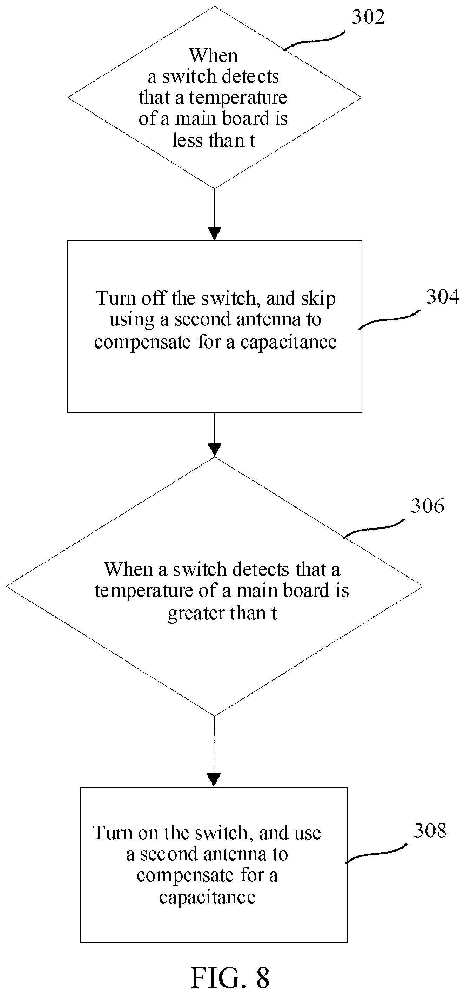

The following describes an operating principle of the electronic device in the fourth embodiment of this application with reference to an embodiment in FIG. 8.

Step 302: Determine whether the temperature that is of the main board of the electronic device and that is detected by the temperature control switch is less than a temperature threshold t.

Step 304: If the detected temperature is less than t, turn off the temperature control switch; for example, use only the first antenna electrode to detect a capacitance, and skip using the second antenna electrode to compensate for the detected capacitance.

Step 306: Determine whether the temperature that is of the main board of the electronic device and that is detected by the temperature control switch is greater than a temperature threshold t.

Step 308: If the detected temperature is greater than t, turn on the temperature control switch; and in this case, use the second antenna electrode to compensate for a capacitance, and use the first antenna electrode and the second antenna electrode to detect the capacitance, to increase the detectable capacitance.

In this embodiment, through segmented connections between antenna electrodes, when the temperature of the electronic device increases, a range of the detected capacitance can be increased. Therefore, the SAR sensor does not directly give an error report.

The SAR sensor and a module used by the electronic device to process a radio frequency signal received or transmitted by an antenna electrode share the antenna electrode. Therefore, an isolation module needs to be disposed between the SAR sensor and the antenna electrode, to avoid mutual interference between the SAR sensor and other modules that share the antenna electrode.

In an embodiment, a first detection channel includes a first isolation module. A first end of the first isolation module is connected to the SAR sensor, a second end of the first isolation module is connected to the first antenna electrode, and the first antenna electrode is connected to the second antenna electrode.

As shown in embodiments in FIG. 1, FIG. 2, FIG. 5, and FIG. 7, the first detection channel 21 includes a first isolation module, and the first isolation module is corresponding to the resistor R, the inductor L, and the capacitor CAP that are included in the first detection channel 21.

In a case that a second detection channel is not disconnected from the second antenna electrode, the second detection channel 22 includes a second isolation module, and the second isolation module is corresponding to the resistor R, the inductor L, and the capacitor CAP that are included in the second detection channel.

In another embodiment, a first detection channel includes a second isolation module and a third isolation module. A first end of the second isolation module is connected to the SAR sensor, and a second end of the second isolation module is connected to the first antenna electrode. A first end of the third isolation module is connected to the SAR sensor, and a second end of the third isolation module is connected to the second antenna electrode.

In this embodiment, a plurality of antenna electrodes may be connected to a same detection channel through an isolation module.

Optionally, the second isolation module includes a first resistor, a first inductor, and a first capacitor, a first end of the first resistor is connected to the SAR sensor, a second end of the first resistor is connected to a first end of the first inductor, a second end of the first inductor is connected to a first end of the first capacitor and the first antenna electrode, and a second end of the first capacitor is grounded; and

the third isolation module includes the first resistor, a second inductor, and a second capacitor, a first end of the second inductor is connected to a second end of the second resistor, a second end of the second inductor is connected to a first end of the second capacitor and the second antenna electrode, and a second end of the second capacitor is grounded.

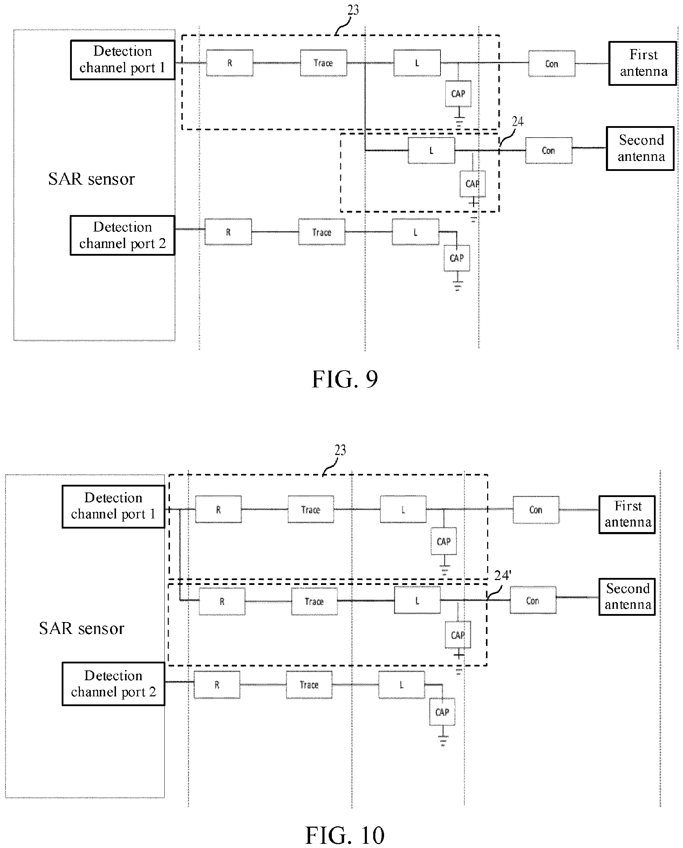

FIG. 9 is a diagram of a circuit structure of an electronic device according to a fifth embodiment of this application.

As shown in FIG. 9, a second isolation module 23 includes a resistor R, an inductor L, and a capacitor CAP, and a first antenna electrode is connected to the corresponding inductor L and capacitor CAP through an interface Con. A third isolation module 24 includes an inductor L and a capacitor CAP, and a second antenna electrode is connected to the corresponding inductor L and capacitor CAP through an interface Con.

In other words, the first antenna electrode and the second antenna electrode are correspondingly connected at the inductors L of the isolation modules.

In this embodiment, the two antenna electrodes are connected at input ends of the inductors L. This expands an area of the antenna electrodes, and correspondingly increases a detection distance of a SAR sensor. Therefore, the electronic device can detect a user at a long distance, and when the user is not close to the electronic device, transmit power of the antennas can be increased, and performance of the antennas can be improved.

Optionally, the second isolation module includes a first resistor, a first inductor, and a first capacitor, a first end of the first resistor is connected to the SAR sensor, a second end of the first resistor is connected to a first end of the first inductor, a second end of the first inductor is connected to a first end of the first capacitor and the first antenna electrode, and a second end of the first capacitor is grounded; and

the third isolation module includes a second resistor, a second inductor, and a second capacitor, a first end of the second resistor is connected to the SAR sensor, a second end of the second resistor is connected to a first end of the second inductor, a second end of the second inductor is connected to a first end of the second capacitor and the second antenna electrode, and a second end of the second capacitor is grounded.

FIG. 10 is a diagram of a circuit structure of an electronic device according to a sixth embodiment of this application.

As shown in FIG. 10, a second isolation module 23 includes a resistor R, an inductor L, and a capacitor CAP, and a first antenna electrode is connected to the corresponding inductor L and capacitor CAP through an interface Con. A third isolation module 24 includes a resistor R, an inductor L, and a capacitor CAP, and a second antenna electrode is connected to the corresponding inductor L and capacitor CAP through an interface Con.

In other words, the first antenna electrode and the second antenna electrode are correspondingly connected at detection channel ports.

In this embodiment, the two antenna electrodes are connected directly at the detection channel ports of a SAR sensor. This expands an area of the antenna electrodes, and correspondingly increases a detection distance of the SAR sensor. Therefore, the electronic device can detect a user at a long distance, and when the user is not close to the electronic device, transmit power of the antennas can be increased, and performance of the antennas can be improved.

In embodiments of this application, the electronic device includes the SAR sensor, the first antenna electrode, and the second antenna electrode. The SAR sensor includes the first detection channel and the second detection channel. The first antenna electrode is connected to the SAR sensor through the first detection channel, the second antenna electrode is connected to the SAR sensor through the second detection channel, and the SAR sensor determines the distance between the electronic device and the human body by using the signal of the first antenna electrode and/or the signal of the second antenna electrode. The adjustment path is disposed between the first antenna electrode and the second antenna electrode, and the adjustment path is configured to adjust the connection status between the first antenna electrode and the second antenna electrode. In this way, the plurality of antenna electrodes can be adjacently connected, and the area of the antenna electrodes of the electronic device is expanded, so that the limit detection distance that is between the electronic device and the human body and that is detected by the SAR sensor can be corresponding to the area of the plurality of connected antenna electrodes and can be increased correspondingly. Therefore, the electronic device can detect the user at a long distance, and when the user is not close to the electronic device, the radiated power of the antennas can be increased, and the performance of the antennas can be improved. When the user is close to the electronic device, the radiated power of the antennas is reduced to reduce radiation to the user.

It should be noted that in this specification, terms "include", "comprise", or any other variants thereof are intended to cover a non-exclusive inclusion, so that a process, a method, an article, or an apparatus that includes a list of elements includes those elements, and also includes other elements not expressly listed, or further includes elements inherent to this process, method, article, or apparatus. Without more limitations, an element defined by a sentence "including one" does not exclude a case that there are still other same elements in the process, method, article, or apparatus that includes the element. In addition, it should be noted that the scopes of the methods and apparatuses in implementations of this application are not limited to performing functions in the order shown or discussed, and may further include performing functions in a substantially simultaneous manner or in a reverse order according to the functions involved. For example, the described methods may be performed in an order different from the described order, and various steps may be further added, omitted, or combined. Moreover, features described with reference to some examples may be combined in other examples.

According to the descriptions in the foregoing implementations, a person skilled in the art may clearly understand that the methods in the foregoing embodiments may be implemented by software in addition to a necessary general hardware platform or by hardware only. In many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the methods described in embodiments of this application.

The foregoing describes embodiments of this application with reference to the accompanying drawings. However, this application is not limited to the foregoing specific implementations, and the foregoing specific implementations are merely examples but are not limitative. A person of ordinary skill in the art can make various variations under the teaching of this application without departing from the essence of this application and the protection scope of the claims, and such variations shall fall within the protection scope of this application.

**Claims**

1. An electronic device, comprising:

   a SAR sensor, wherein the SAR sensor comprises a first detection channel and a second detection channel; and
   a first antenna electrode and a second antenna electrode, wherein the first antenna electrode is connected to the SAR sensor through the first detection channel, the second antenna electrode is connected to the SAR sensor through the second detection channel, and the SAR sensor determines a distance between the electronic device and a human body by using a signal of the first antenna electrode and/or a signal of the second antenna electrode; wherein an adjustment path is disposed between the first antenna electrode and the second antenna electrode, and the adjustment path is configured to adjust a connection status between the first antenna electrode and the second antenna electrode.

2. The electronic device according to claim 1, wherein the adjustment path comprises an inductor or a resistor.

3. The electronic device according to claim 2, wherein the adjustment path further comprises a switch; and

   the switch is connected in series to the inductor; or
   the switch is connected in series to the resistor.

4. The electronic device according to claim 3, wherein

   when the switch is turned off, the first antenna electrode and the second antenna electrode are in an isolated state, and the SAR sensor detects the signal of the first antenna electrode by using the first detection channel, to determine a first distance between the electronic device and the human body; or the SAR sensor detects the signal of the second antenna electrode by using the second detection channel, to determine a second distance between the electronic device and the human body; or
   when the switch is turned on, the first antenna electrode and the second antenna electrode are in a connected state, the SAR sensor detects the signal of the first antenna electrode and the signal of the second antenna electrode by using the first detection channel, to determine a third distance between the electronic device and the human body, and the second detection channel is in a high-impedance state; or the SAR sensor detects the signal of the first antenna electrode and the signal of the second antenna electrode by using the second detection channel, to determine a third distance between the electronic device and the human body, and the first detection channel is in a high-impedance state.

5. The electronic device according to claim 3, wherein the switch is a temperature control switch, configured to detect a temperature of the electronic device and open or close based on the temperature; and

   when the switch is turned off, the first antenna electrode and the second antenna electrode are in an isolated state, and the SAR sensor detects the signal of the first antenna electrode by using the first detection channel, to determine a first capacitance of the first antenna electrode; or the SAR sensor detects the signal of the second antenna electrode by using the second detection channel, to determine a second capacitance of the second antenna electrode; or when the switch is turned on, the first antenna electrode and the second antenna electrode are in a connected state, the SAR sensor detects the signal of the first antenna electrode and the signal of the second antenna electrode by using the first detection channel, to determine a third capacitance corresponding to the signal of the first antenna electrode and the signal of the second antenna electrode, and the second detection channel is in a high-impedance state; or the SAR sensor detects the signal of the first antenna electrode and the signal of the second antenna electrode by using the second detection channel, to determine a third capacitance corresponding to the signal of the first antenna electrode and the signal of the second antenna electrode, and the first detection channel is in a high-impedance state.

6. The electronic device according to claim 4 or 5, wherein areas of the first antenna electrode and the second antenna electrode are different.

7. The electronic device according to claim 1, wherein the first detection channel comprises a first isolation module; and
a first end of the first isolation module is connected to the SAR sensor, a second end of the first isolation module is connected to the first antenna electrode, and the first antenna electrode is connected to the second antenna electrode.

8. The electronic device according to claim 1, wherein the first detection channel comprises a second isolation module and a third isolation module;

a first end of the second isolation module is connected to the SAR sensor, and a second end of the second isolation module is connected to the first antenna electrode; and
a first end of the third isolation module is connected to the SAR sensor, and a second end of the third isolation module is connected to the second antenna electrode.

9. The electronic device according to claim 8, wherein

the second isolation module comprises a first resistor, a first inductor, and a first capacitor, a first end of the first resistor is connected to the SAR sensor, a second end of the first resistor is connected to a first end of the first inductor, a second end of the first inductor is connected to a first end of the first capacitor and the first antenna electrode, and a second end of the first capacitor is grounded; and
the third isolation module comprises the first resistor, a second inductor, and a second capacitor, a first end of the second inductor is connected to a second end of the second resistor, a second end of the second inductor is connected to a first end of the second capacitor and the second antenna electrode, and a second end of the second capacitor is grounded.

10. The electronic device according to claim 8, wherein

the second isolation module comprises a first resistor, a first inductor, and a first capacitor, a first end of the first resistor is connected to the SAR sensor, a second end of the first resistor is connected to a first end of the first inductor, a second end of the first inductor is connected to a first end of the first capacitor and the first antenna electrode, and a second end of the first capacitor is grounded; and
the third isolation module comprises a second resistor, a second inductor, and a second capacitor, a first end of the second resistor is connected to the SAR sensor, a second end of the second resistor is connected to a first end of the second inductor, a second end of the second inductor is connected to a first end of the second capacitor and the second antenna electrode, and a second end of the second capacitor is grounded.

FIG. 1

FIG. 2

In an initial state, a switch between a first antenna and a second antenna is turned on, and one detection channel is in a low-impedance state and the other detection channel is in a high-impedance state — 102

When it is detected that a distance between a user and a device is greater than n — 104

Skip reducing radiated power of the antennas — 106

When it is detected that a distance between a user and a device is less than n and greater than n1 — 108

Reduce radiated power of the two antennas to m1 and k1, respectively — 110

When it is detected that a distance between a user and a device is greater than n1 and less than n2 — 112

Turn off the switch between the two antennas, and correspondingly detect distances between the user and the device respectively by using the two channels — 114

When a first channel detects that the distance between the user and the device is greater than n1 — 116

Reduce the radiated power of the first antenna to m3 — 118

When a first channel detects that the distance between the user and the device is less than n1 — 120

Reduce the radiated power of the first antenna to m4 — 122

When a second channel detects that the distance between the user and the device is greater than n2 — 124

Reduce the radiated power of the second antenna to k3 — 126

When a second channel detects that the distance between the user and the device is less than n2 — 128

Reduce the radiated power of the second antenna to k4 — 130

FIG. 3

FIG. 4

FIG. 5

In an initial state, a switch between a first antenna and a second antenna is turned on, and in this case, a limit distance detected is n2 — 202

When it is detected that a distance between a user and a device is greater than n2 — 204

Skip reducing radiated power of the antennas — 206

When it is detected that a distance between a user and a device is less than n2 and greater than n1 — 208

Reduce radiated power of the antennas to m1 — 210

When it is detected that a distance between a user and a device is less than n1 — 212

Reduce radiated power of the antennas to m2, and turn off the switch between the two antennas — 214

FIG. 6

FIG. 7

302

When
a switch detects
that a temperature
of a main board is
less than t

Turn off the switch, and skip
using a second antenna to
compensate for a capacitance

304

306

When a switch detects that a
temperature of a main board is
greater than t

Turn on the switch, and use
a second antenna to
compensate for a
capacitance

308

FIG. 8

23

| | | | | |
|---|---|---|---|---|
| Detection channel port 1 | R | Trace | L | Con → First antenna |

CAP

24

L → Con → Second antenna

CAP

| | | | |
|---|---|---|---|
| Detection channel port 2 | R | Trace | L |

CAP

SAR sensor

**FIG. 9**

23

| | | | | |
|---|---|---|---|---|
| Detection channel port 1 | R | Trace | L | Con → First antenna |

CAP

24'

| | | | | |
|---|---|---|---|---|
| R | Trace | L | Con → Second antenna |

CAP

| | | | |
|---|---|---|---|
| Detection channel port 2 | R | Trace | L |

CAP

SAR sensor

**FIG. 10**

## INTERNATIONAL SEARCH REPORT

International application No.

**PCT/CN2023/092347**

| A. | CLASSIFICATION OF SUBJECT MATTER |
|---|---|

H01Q1/22(2006.01)i

According to International Patent Classification (IPC) or to both national classification and IPC

| B. | FIELDS SEARCHED |
|---|---|

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

CNTXT, ENTXTC, DWPI: SAR传感, 比吸收率, 感测, 感应, 检测, 传感, 第二, 多, 天线, 极片, 通道, 通路, 电感, 电阻, 开关, 调节, 调谐, 连接, 面积, 模式, 状态, 切换, SAR, specific absorption rate, sense, second, multi+, antenna, channel, path, inductance, resistance, regulation, tuning, connection, area, mode, state, switch+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 114899597 A (VIVO COMMUNICATION TECHNOLOGY CO., LTD.) 12 August 2022 (2022-08-12)<br>  claims 1-10 | 1-10 |
| PX | CN 114755501 A (HUAQIN TECHNOLOGY CO., LTD.) 15 July 2022 (2022-07-15)<br>  description, paragraphs 0022-0044, and figure 1 | 1-10 |
| Y | CN 112114202 A (ZTE CORP.) 22 December 2020 (2020-12-22)<br>  description, paragraphs 0038-0055, and figures 1-5 | 1-10 |
| Y | CN 214589224 U (VIVO COMMUNICATION TECHNOLOGY CO., LTD.) 02 November 2021 (2021-11-02)<br>  description, paragraphs 0023-0043, and figures 1-2 | 1-10 |
| A | CN 111405652 A (WINGTECH COMMUNICATION CO., LTD.) 10 July 2020 (2020-07-10)<br>  entire document | 1-10 |
| A | WO 2020253521 A1 (ONEPLUS TECHNOLOGY (SHENZHEN) CO., LTD.) 24 December 2020 (2020-12-24)<br>  entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 July 2023** | **11 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/092347**

| Patent document cited in search report | | | Publication date (day/month/year) | Patent family member(s) | | | Publication date (day/month/year) |
|---|---|---|---|---|---|---|---|
| CN | 114899597 | A | 12 August 2022 | None | | | |
| CN | 114755501 | A | 15 July 2022 | None | | | |
| CN | 112114202 | A | 22 December 2020 | WO | 2021008261 | A1 | 21 January 2021 |
| | | | | KR | 20220005038 | A | 12 January 2022 |
| | | | | EP | 3978939 | A1 | 06 April 2022 |
| | | | | JP | 2022539949 | A | 14 September 2022 |
| | | | | US | 2022349839 | A1 | 03 November 2022 |
| CN | 214589224 | U | 02 November 2021 | None | | | |
| CN | 111405652 | A | 10 July 2020 | CN | 212115692 | U | 08 December 2020 |
| WO | 2020253521 | A1 | 24 December 2020 | CN | 110445517 | A | 12 November 2019 |

Form PCT/ISA/210 (patent family annex) (July 2022)

## REFERENCES CITED IN THE DESCRIPTION

**Patent documents cited in the description**

- CN 202210493211